# EUROPEAN PATENT SPECIFICATION

(11) **EP 3 469 831 B1**
(45) Date of publication and mention of the grant of the patent: **30.04.2025**
(21) Application number: 17730093.6
(22) Date of filing: 06.06.2017
(51) Int. Cl.: H04W 36/00, H04W 36/30

(54) **METHOD AND APPARATUS FOR DUAL CONNECTIVITY IN NARROW BAND INTERNET OF THINGS**
VERFAHREN UND VORRICHTUNG FÜR DUALE KONNEKTIVITÄT IM SCHMALBANDIGEN INTERNET DER DINGE
PROCÉDÉ ET APPAREIL DE DOUBLE CONNECTIVITÉ DANS L'INTERNET DES OBJETS À BANDE ÉTROITE

(30) Priority: 08.06.2016 IN 201611019707
(43) Date of publication of application: 17.04.2019
(73) Proprietor: Nokia Solutions and Networks Oy, 02610 Espoo (FI)
(72) Inventor: SELVAGANAPATHY, Srinivasan, Bangalore 560117 (IN)
(74) Representative: Script Intellectual Property LLP
(86) International application number: PCT/EP2017/063743
(87) International publication number: WO 2017/211849

(56) References cited:
- WO-A1-2015/065129
- VIDHYA R ET AL: "Coexistence of cellular IOT and 4G networks", 2016 INTERNATIONAL CONFERENCE ON ADVANCED COMMUNICATION CONTROL AND COMPUTING TECHNOLOGIES (ICACCCT), IEEE, 25 May 2016 (2016-05-25), pages 555 - 558, XP033051452, DOI: 10.1109/ICACCCT.2016.7831701
- RATILAINEN ANTTI ET AL: "Protocol performance of UL/DL separation in LTE heterogeneous networks", 2015 INTERNATIONAL SYMPOSIUM ON WIRELESS COMMUNICATION SYSTEMS (ISWCS), IEEE, 25 August 2015 (2015-08-25), pages 21 - 25, XP032891944, DOI: 10.1109/ISWCS.2015.7454330
- RAVANSHID AZAD ET AL: "Multi-connectivity functional architectures in 5G", 2016 IEEE INTERNATIONAL CONFERENCE ON COMMUNICATIONS WORKSHOPS (ICC), IEEE, 23 May 2016 (2016-05-23), pages 187 - 192, XP032919911, DOI: 10.1109/ICCW.2016.7503786

## Description

### Field

The present application relates to a method, apparatus, and computer program and in particular but not exclusively to dual connectivity with NarrowBand Internet of Things (NB-IOT) and LTE.

### Background

A communication system can be seen as a facility that enables communication sessions between two or more entities such as user terminals, base stations/access points and/or other nodes by providing carriers between the various entities involved in the communications path. A communication system can be provided for example by means of a communication network and one or more compatible communication devices. The communication sessions may comprise, for example, communication of data for carrying communications such as voice, electronic mail (email), text message, multimedia and/or content data, machine type communications (MTC), which may have mission critical communication requirements, and so on. Non-limiting examples of services provided comprise two-way or multi-way calls, data communication or multimedia services and access to a data network system, such as the Internet.

In a wireless communication system at least a part of a communication session between at least two stations occurs over a wireless link.

Wireless communication devices can be of different types. Wireless communication devices may or may not need human interaction. A wireless communication device of a user is often referred to as user equipment (UE). Wireless communication devices that do not necessarily need human interaction for communication are sometimes referred to as machine type communication (MTC) devices or internet of things (IOT) devices. A communication device is provided with an appropriate signal receiving and transmitting apparatus for enabling communications, for example enabling access to a communication network or communications directly with other users. The communication device may access a carrier provided by a station or access point, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Another example is the long-term evolution (LTE) of the Universal Mobile Telecommunications System (UMTS) radio-access technology. LTE is being standardized by the 3rd Generation Partnership Project (3GPP). A further example is the so-called 5G or New Radio (the term used by 3GPP) networks. Standardization of 5G or New Radio networks is currently under discussion.

WO 2015/065129 A1 describes a process of adding a base station in a heterogeneous network, thus enabling the support of the terminal's dual connectivity operations.

Vidhya, R et al "Coexistence of cellular IOT and 4G networks" 2016 INTERNATIONAL CONFERENCE ON ADVANCED COMMUNICATION CONTROL AND COMPUTING TECHNOLOGIES (ICACCCT), IEEE, 25 May 2016, pages 555-558 analyses different architectures for offloading bursty traffic to Cellular IOT cells while 4G LTE cells can be used for applications like Video calling, Video streaming and browsing.

Ratilainen, Antti el al "Protocol performance of UL/DL separation in LTE heterogeneous networks", 2015 INTERNATIONAL SYMPOSIUM ON WIRELESS COMMUNICATION SYSTEMS (ISWCS), IEEE, 25 August 2015, pages 21-25 describes the separation of uplink and downlink transmissions so that downlink data is received from the higher power macro nodes, whereas uplink data may be transmitted to closer located pico nodes.

Ravanshid, Azad et al "Multi-connectivity functional architectures in 5G" 2016 IEEE INTERNATIONAL CONFERENCE ON COMMUNICATIONS WORKSHOPS (ICC), IEEE, 23 May 2016, pages 187-192 describes 5G network topologies comprising several clusters of 5G small cells, the coverage area of which overlapping with that of a (either 5G or legacy LTE) macro cell.

### Summary

The invention is defined by the independent claims.

In a first aspect there is provided a method for a user equipment as defined in claim 1.

According to some embodiments, the first carrier is associated with a LTE or 5G radio technology.

In a second aspect there is provided a computer program product for a computer, comprising software code portions for performing the steps of the first aspect when the product is run on the computer.

In a third aspect there is provided an apparatus for a user equipment as defined in claim 4.

In the above, many different embodiments have been described. It should be appreciated that further embodiments may be provided by the combination of any two or more of the embodiments described above.

### Description of Figures

Embodiments will now be described, by way of example only, with reference to the accompanying Figures in which:
Figure 1 shows a schematic diagram of an example communication system comprising a plurality of base stations and a plurality of communication devices;
Figure 2 shows a schematic diagram of an example mobile communication device;
Figure 3 shows a flowchart of an example method according to some embodiments;
Figure 4 shows a schematic diagram of a UE operating in dual connectivity mode according to some embodiments;
Figure 5 shows a schematic diagram of carriers operating in dual connectivity mode under normal coverage and extended coverage conditions according to some embodiments;
Figure 6 shows a schematic diagram of an example control apparatus.

### Detailed description

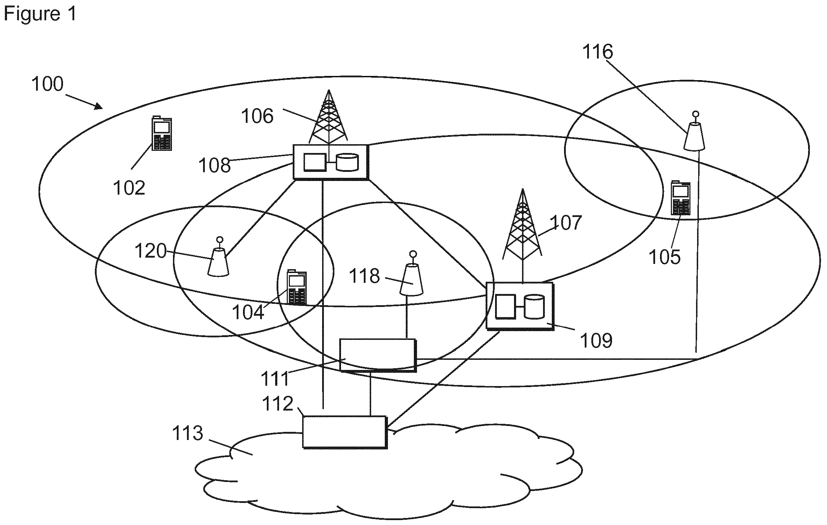

Before explaining in detail the examples, certain general principles of a wireless communication system and mobile communication devices are briefly explained with reference to Figures 1 to 2 to assist in understanding the technology underlying the described examples.

In a wireless communication system 100, such as that shown in figure 1, a wireless communication devices, for example, user equipment (UE) or MTC devices 102, 104, 105 are provided wireless access via at least one base station or similar wireless transmitting and/or receiving wireless infrastructure node or point. Such a node can be, for example, a base station or an eNodeB (eNB) as in LTE or an access point (AP) in WLAN, or other wireless infrastructure node. These nodes will be generally referred to as base stations. Base stations are typically controlled by at least one appropriate controller apparatus, so as to enable operation thereof and management of mobile communication devices in communication with the base stations. The controller apparatus may be located in a radio access network (e.g. wireless communication system 100) or in a core network (CN) (not shown) and may be implemented as one central apparatus or its functionality may be distributed over several apparatus. The controller apparatus may be part of the base station and/or provided by a separate entity such as a Radio Network Controller. In Figure 1 control apparatus 108 and 109 are shown to control the respective macro level base stations 106 and 107. In some systems, the control apparatus may additionally or alternatively be provided in a radio network controller. Other examples of radio access system comprise those provided by base stations of systems that are based on technologies such as 5G or new radio, wireless local area network (WLAN) and/or WiMax (Worldwide Interoperability for Microwave Access). A base station can provide coverage for an entire cell or similar radio service area.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided.

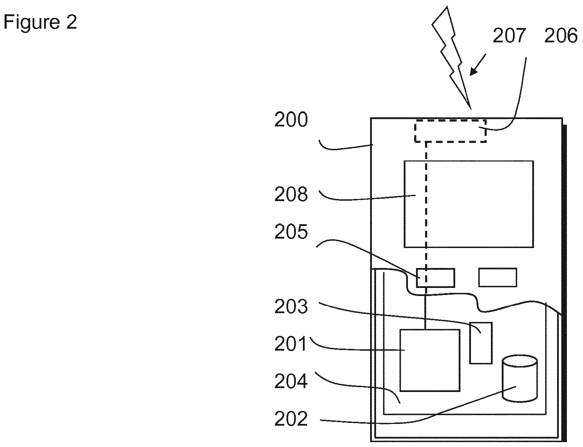

A possible wireless communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. In the present teachings the terms UE or "user" are used to refer to any type of wireless communication device.

The wireless device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the wireless device.

A wireless device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the wireless device by means of a suitable user interface such as key pad 205, voice commands, touch sensitive screen or pad, combinations thereof or the like. A display 208, a speaker and a microphone can be also provided. Furthermore, a wireless communication device may comprise appropriate connectors (either wired or wireless) to other devices and/or for connecting external accessories, for example hands-free equipment, thereto. The communication devices 102, 104, 105 may access the communication system based on various access techniques.

The support of low complexity internet of things (IOT) devices in cellular networks is being considered. Proposed solutions may provide coverage improvement of up to 20dB and/or longer battery lifetime. Inband or guardband deployment in LTE BW may be supported. In addition, or alternatively, standalone deployment may be supported. Such solutions may operate on a system bandwidth of 200 KHz.

A narrowband (NB)-IOT is being considered for further standardisation. NB-IOT may use an OFDM based air-interface, similarly to LTE. 15KHz subcarrier spacing in downlink for all the deployments may be supported, with 15KHz or 3.75 KHz multiple and single carrier options possible for uplink.

Although NB-IOT aims to address the use of low complexity device at extended coverage, it may be used or modified as a single physical resource block (PRB) LTE carrier for devices/UE in normal coverage as well as extended coverage conditions. In such cases, this single PRB may provide a data-rate of up to 200 kbps. With support of higher order modulations, the data rate may be further increased.

When dual connectivity is supported with secondary nodes deployed in indoor locations, the RRC Signaling connection maintained with a MeNB cannot be maintained. In these cases, reducing the throughput and/or increasing the reliability of macro connection of dual connectivity may be desirable.

When LTE nodes are introduced in deployments which have 200KHz GSM deployments, more frequent inter-RAT measurements and handovers may be used to improve capacity. In such scenarios, introducing dual connectivity to reduce the handover signaling may require a macro LTE cell.

This following relates to interworking of NB-IOT and LTE small-cells.

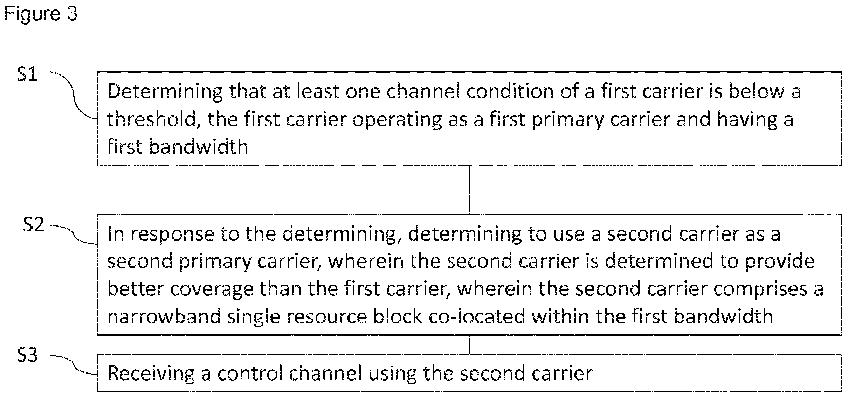

Figure 3 shows a flowchart of an example method according to some embodiments. In a first step the method comprises determining that at least one channel condition of a first carrier is below a threshold, the first carrier operating as a first primary carrier and having a first bandwidth.

In a second step, the method comprises, in response to the determining, determining to use a second carrier as a second primary carrier, wherein the second carrier is determined to provide better coverage than the first carrier, wherein the second carrier comprises a narrowband single resource block co-located within the first bandwidth.

In a third step, the method comprises receiving a control channel using the second carrier. The first primary carrier may be associated with a first radio access technology, such as LTE. The second primary carrier may be associated with a second radio access technology, such as NB-IOT.

The method may comprise in response to determining that at least one channel condition of a first carrier is below a threshold, causing a handover of bearers other than bearers of the control channel, to a secondary carrier (e.g. a carrier associated with a secondary cell such as a SeNB).

The method may provide a form of carrier aggregation, and associated architecture, for interworking of LTE and NB-IOT cell.

The method may provide a carrier aggregation combination of LTE and NB-IOT (200KHz) carriers. In addition to introduction of this carrier aggregation mechanism, the method involves the dual connectivity architecture with NB-IOT as master cell group (MCG) for the MeNB and LTE as secondary cell group (SCG) for the SeNB.

In an example an operator may deploy macro LTE cells as a coverage layer in Absolute Radio Frequency Channel Number (ARFCN) F1 with LTE small-cells as a capacity layer in ARFCN F2. The operator provides dual connectivity between macro-cells and small-cells. ARFCN F1 may provide the first primary carrier and ARFCN the secondary carrier The UE in this example may be capable of LTE and NB-IOT reception. The operator may assign one PRB within the operating bandwidth of F1 as NB-IOT PRB. This PRB may provide the second primary carrier, e.g., extended coverage for the primary (MeNB) connection of dual connectivity. Dual connectivity for small-cells deployed at indoor coverage conditions may be maintained.

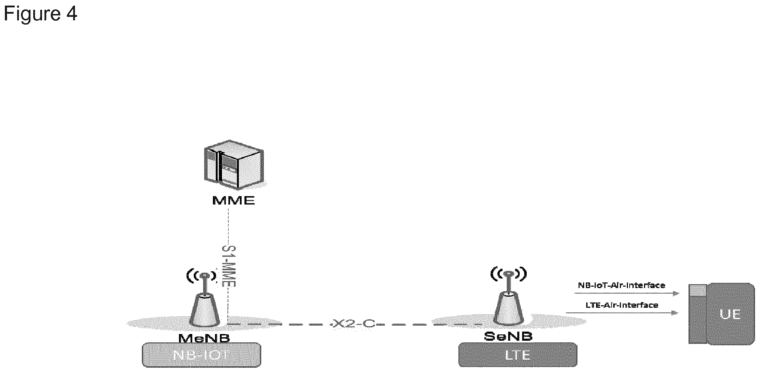

Figure 4 shows an illustration of an example embodiment, in which the UE operates using dual connectivity configuration between NB-IOT and LTE carrier. The NB-IOT carrier acts as MCG for the MeNB and the LTE as SCG carrier for SeNB.

A method for switching from LTE carrier to inband LTE carrier when network detects UE mobility towards a small-cell which is deployed in condition where macro LTE carrier cannot be maintained may be provided. In such cases eNB to MeNB handover procedure is executed in simpler manner to switch the primary connection to NB-IOT along with SeNB-Addition.

In an embodiment, the MeNB connection from LTE to NB-IOT may be switched as follows.

A UE starts its connection in F1 without SeNB. When the UE detects SeNB, e.g. via measurements, the UE may also identify that the primary carrier degrades below the threshold.

Since the MeNB has a co-located "extended coverage PRB", MeNB will trigger SeNB-Addition along with switching of MeNB connection from LTE to NB-IOT.

As part of this procedure RRC-Reconfiguration may include SeNB-Addition and switching of PDCCH from LTE to NB-IOT-PDCCH with an indication of NB-IOT PRB.

This handover may ensure offloading of all the bearers including default bearer to SeNB so that the NB-IOT carrier only handles the signaling radio-bearers.

One embodiment for switching from NB-IOT Primary connection to LTE RRC connection on UE exit from LTE Small-cell may be as follows.

On exit from LTE small-cell, NB-IOT RRC connection will intiate SeNB-Release procedure first.

On successful release of SeNB connection, NB-IOT RRC connection will be modified as LTE RRC connection via RRC Reconfiguration message.

This message may include the required system information of LTE cell for continuing the RRC connection in the LTE carrier.

The handover may be completed without performing a Random access procedure since both cells are collocated and SFN synchronised.

It may be possible to combine the SeNB-Release and change of NB-IOT primary connection as LTE RRC connection in single RRC Procedure also.

As a result, handover from NB-IOT+LTE dual connection to LTE single connection may be achieved. The RRC-Reconfiguration message to UE may include the new LTE configuration as part of RRC Reconfiguration which contains information to release the SCG bearers. A dual connectivity configuration between NB-IOT and LTE carrier in both UE and network may thus be achieved. A method to inform the LTE UE about the presence of inband/guard-band NB-IOT carriers for faster handover may also be provided.

Combined handover to change single LTE RRC connection to NB-LTE+LTE Dual connectivity RRC connection and vice versa.

Alternatively, or in addition, an operator may have 200 KHz GSM Deployments and introduce LTE as small-cell capacity layer. To provide dual connectivity having a reliable RRC anchor, some of the GSM carriers may be modified as LTE carriers. In this embodiment, a handover mechanism from GPRS to NB-IOT is provided, with the target configuration of NB-IOT as PSCell and MeNB and LTE-cell as secondary cell.

Inter-RAT handover from GSM to NB-IOT and also Inter-RAT handover from GSM to NB-IOT+LTE dual connectivity configuration and vice versa may thus be provided.

Decision of Inter-RAT handover from GSM to NB-IOT and NB-IOT to GSM may be based on traffic volume as well as coverage condition as event triggers.

One embodiment to handover the UE from GSM layer to NB-IOT layer is explained here.

The network knows the collocated NB-IOT carrier and also the LTE small-cells deployed under this macro-cell.

The UE connection will start as a GPRS packet switched (PS) connection.

Whenever the user device detects a LTE-small cell, via e.g., inter-RAT measurements, the sure device will trigger handover from GPRS layer to NB-IOT as a MeNB.

A source may indicate to NB-IOT cell the need for handover to LTE as a dual connectivity RRC connection.

NB-IOT prepares its resources to accommodate the signaling bearer and also the LTE small-cell as a secondary cell to accommodate the new bearers.

As part of Inter-RAT handover command, UE may be given a LTE Radio resource configuration comprising NB-IOT as primary-cell and LTE as secondary connection.

The implementation, such as the change of RRC message contents and X2 message contents, can be standardised based on further analysis.

The exit of a UE from LTE small-cells may be as follows.

On exit of the UE from a LTE-small-cell, the bearers are moved to NB-IOT RRC connection as part of SeNB-Release procedure.

Based on traffic volume measurements, the NB-IOT cell may decide on immediate Inter-RAT handover to GSM layer so that the required PS throughput can be achieved. The Inter-RAT switch to GPRS may be based on timer whose value decided can be based on the UE mobility between macro and small-cells.

It may be possible to enable the extended coverage functionality alone without power saving options towards UE which is capable of NB-IOT+LTE carrier aggregation capability. The UE in connected mode of NB-IOT should support LTE layer measurements to enable handover to LTE cell whenever required. The UE should be able to support Network initiated blind handover from NB-IOT carrier to GSM carrier, network initiated handover and/or higher order modulations depending on the UE capability.

A method as discussed with reference to Figure 3 may be used for 5G small cell deployment. Here, instead of LTE acting as anchor, NB-IOT may act as a reliable anchor also serving extended coverage conditions.

The method as described above uses NB-IOT PRB for providing low bandwidth extended coverage RRC-Anchor for dual connectivity in contrast to the current focus of using the NB-IOT PRB for IOT applications only.

When NB-IOT cell is used only for extended coverage purpose without need for energy saving, NB-IOT physical layer may be adapted accordingly to optimise the performance for extended coverage only. The extended coverage may not be required for some deployments. In such cases support of higher order modulation schemers in NB-IOT carrier may also be activated.

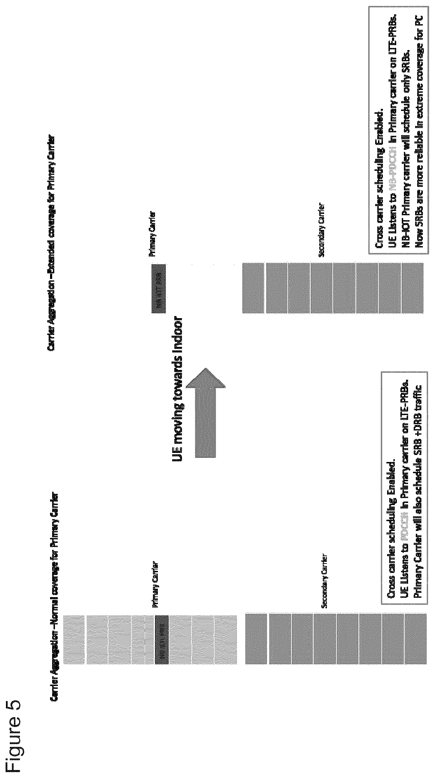

If reliable backhaul is possible between the LTE cell and NB-IOT cells, the NB-IOT cell can also support cross carrier scheduling. This implementation option is illustrated in Figure 5, which shows how the UE uses the NB-IOT as the primary carrier as the UE moves towards, e.g. an indoor scenario.

In summary, the NB-IOT solution may be used other than in an IOT solution. It may be used as a narrowband robust Primary LTE carrier for carrier aggregation/dual connectivity cases. Dual connectivity at indoor locations and/or the deployment of LTE capacity layer where operator is having enough 200 KHz spectrum slices may be addressed by this approach.

It should be understood that each block of the flowchart of the Figures and any combination thereof may be implemented by various means or their combinations, such as hardware, software, firmware, one or more processors and/or circuitry.

It is noted that whilst embodiments have been described in relation to one example of a LTE network, similar principles maybe applied in relation to other examples of radio networks. It should be noted that other embodiments may be based on other cellular technology other than LTE, 5G or on variants of LTE or 5G. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

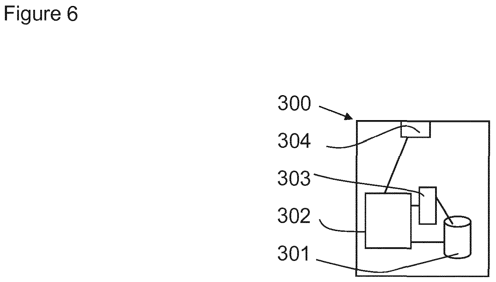

The method may be implemented in such as a control apparatus as shown in Figure 6. The method may be implanted in a single processor 201 or control apparatus or across more than one processor or control apparatus. Figure 6 shows an example of a control apparatus for a communication system, for example to be coupled to and/or for controlling a station of an access system, such as a RAN node, e.g. a base station, (e) node B, a central unit of a cloud architecture or a node of a core network such as an MME or S-GW, a scheduling entity such as a spectrum management entity, or a server or host. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head. For example the control apparatus 300 or processor 201 can be configured to execute an appropriate software code to provide the control functions. Control functions may comprise [claim wording]

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

In an embodiment not covered by the claims at least some of the functionalities of the apparatus of Figure 6 may be shared between two physically separate devices forming one operational entity. Therefore, the apparatus may be seen to depict the operational entity comprising one or more physically separate devices for executing at least some of the described processes. The apparatus utilizing such shared architecture, may comprise a remote control unit (RCU), such as a host computer or a server computer, operatively coupled (e.g. via a wireless or wired network) to a remote radio head (RRH) located in the base station. In an embodiment, at least some of the described processes may be performed by the RCU. In an embodiment, the execution of at least some of the described processes may be shared among the RRH and the RCU.

In an embodiment, not covered by the claims, the RCU may generate a virtual network through which the RCU communicates with the RRH. In general, virtual net-working may involve a process of combining hardware and software network resources and network functionality into a single, software-based administrative entity, a virtual network. Network virtualization may involve platform virtualization, often combined with resource virtualization. Network virtualization may be categorized as external virtual networking which combines many net-works, or parts of networks, into the server computer or the host computer (i.e. to the RCU). External network virtualization is targeted to optimized network sharing. Another category is internal virtual networking which provides net-work-like functionality to the software containers on a single system. Virtual networking may also be used for testing the terminal device.

In an embodiment, not covered by the claims, the virtual network may provide flexible distribution of operations between the RRH and the RCU. In practice, any digital signal processing task may be performed in either the RRH or the RCU and the boundary where the responsibility is shifted between the RRH and the RCU may be selected according to implementation.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. A method for a user equipment in a dual connectivity state comprising:
determining that at least one channel condition of a first carrier is below a threshold, the first carrier operating as a primary carrier and having a first bandwidth (S1), wherein a primary carrier is for a master base station;
in response to the determining, switching from the first primary carrier to a second carrier operating as a primary carrier, wherein the second carrier is determined to provide better coverage than the first carrier, and wherein the second carrier comprises a narrowband internet of things, NB-IoT, single resource block co-located within the first bandwidth (S2); and
receiving a control channel using the second carrier (S3).

2. A method according to claim 1, wherein the first carrier is associated with LTE or 5G radio technology.

3. A method according to claim 1 or claim 2, comprising, in response to the determining, causing a handover of bearers other than bearers of the control channel to a secondary carrier, wherein the secondary carrier is for a secondary base station.

4. An apparatus for a user equipment in a dual connectivity state comprising:
at least one processor and at least one memory including a computer program code, the at least one memory and the computer program code configured to, with the at least one processor, cause the apparatus at least to:
determine that at least one channel condition of a first carrier is below a threshold, the first carrier operating as a primary carrier and having a first bandwidth (S1), wherein a primary carrier is for a master base station;
in response to the determining, switching from the first primary carrier to a second carrier operating as a primary carrier, wherein the second carrier is determined to provide better coverage than the first carrier, and wherein the second carrier comprises a narrowband internet of things, NB-IoT, single resource block co-located within the first bandwidth (S2); and
receive a control channel using the second carrier (S3).

5. An apparatus according to claim 4, wherein the first carrier is associated LTE or 5G radio technology and the second radio access technology is a narrow-band internet of things technology.

6. An apparatus according to claim 4 or claim 5, wherein in response to the determining, the apparatus is configured to cause a handover of bearers other than bearers of the control channel to a secondary carrier, wherein a secondary carrier is for a secondary base station.

7. A computer program product for a computer, comprising software code portions for performing the steps of any of claims 1 to 3 when the product is run on the computer.

## Patentansprüche

1. Verfahren für eine Teilnehmereinrichtung in einem dualen Konnektivitätsstatus, das Folgendes umfasst:
Bestimmen, dass mindestens ein Kanalzustand eines ersten Betreibers unter einem Schwellwert liegt, wobei der erste Betreiber als ein primärer Betreiber betrieben wird und eine erste Bandbreite (S1) aufweist, wobei ein primärer Betreiber für eine Masterbasisstation vorgesehen ist;
in Reaktion auf das Bestimmen Umschalten vom ersten primären Betreiber zu einem zweiten Betreiber, der als ein primärer Betreiber betrieben wird, wobei bestimmt wird, dass der zweite Betreiber eine bessere Abdeckung bereitstellt als der erste Betreiber, und wobei der zweite Betreiber einen einzelnen Schmalband-Internet-der-Dinge(NB-IoT)-Ressourcenblock umfasst, der in der ersten Bandbreite (S2) kollokiert ist; und
Empfangen eines Steuerkanals unter Verwendung des zweiten Betreibers (S3).

2. Verfahren nach Anspruch 1, wobei der erste Betreiber mit einer LTE- oder einer 5G-Funktechnologie verknüpft ist.

3. Verfahren nach Anspruch 1 oder Anspruch 2, das in Reaktion auf das Bestimmen das Veranlassen einer Übergabe von anderen Trägern als Trägern des Steuerkanals zu einem zweiten Betreiber umfasst, wobei der zweite Betreiber für eine sekundäre Basisstation vorgesehen ist.

4. Vorrichtung für eine Teilnehmereinrichtung in einem dualen Konnektivitätsstatus, die Folgendes umfasst:
mindestens einen Prozessor und mindestens einen Speicher, der Computerprogrammcode beinhaltet, wobei der mindestens eine Speicher und der Computerprogrammcode dazu ausgelegt sind, die Vorrichtung mit dem mindestens einen Prozessor mindestens zu Folgendem zu veranlassen:
Bestimmen, dass mindestens ein Kanalzustand eines ersten Betreibers unter einem Schwellwert liegt, wobei der erste Betreiber als ein primärer Betreiber betrieben wird und eine erste Bandbreite (S1) aufweist, wobei ein primärer Betreiber für eine Masterbasisstation vorgesehen ist;
in Reaktion auf das Bestimmen Umschalten vom ersten primären Betreiber zu einem zweiten Betreiber, der als ein primärer Betreiber betrieben wird, wobei bestimmt wird, dass der zweite Betreiber eine bessere Abdeckung bereitstellt als der erste Betreiber, und wobei der zweite Betreiber einen einzelnen Schmalband-Internet-der-Dinge(NB-IoT)-Ressourcenblock umfasst, der in der ersten Bandbreite (S2) kollokiert ist; und
Empfangen eines Steuerkanals unter Verwendung des zweiten Betreibers (S3).

5. Vorrichtung nach Anspruch 4, wobei der erste Betreiber mit einer LTE- oder einer 5G-Funktechnologie verknüpft ist und die zweite Funkzugangstechnologie eine Schmalband-Internet-der-Dinge-Technologie ist.

6. Vorrichtung nach Anspruch 4 oder Anspruch 5, wobei in Reaktion auf das Bestimmen die Vorrichtung dazu ausgelegt ist, eine Übergabe von anderen Trägern als Trägern des Steuerkanals zu einem zweiten Betreiber zu veranlassen, wobei der zweite Betreiber für eine sekundäre Basisstation vorgesehen ist.

7. Computerprogrammprodukt für einen Computer, das Softwarecodeabschnitte zum Durchführen der Schritte von einem der Ansprüche 1 bis 3, wenn das Produkt auf dem Computer läuft, umfasst.

## Revendications

1. Procédé pour un équipement utilisateur dans un état de double connectivité comprenant les étapes suivantes :
déterminer qu'au moins une condition de canal d'une première porteuse est en dessous d'un seuil, la première porteuse fonctionnant comme une porteuse primaire et ayant une première largeur de bande (S1), dans lequel une porteuse primaire est destinée à une station de base principale ;
en réponse à la détermination, passer de la première porteuse primaire à une deuxième porteuse fonctionnant comme une porteuse primaire, dans lequel il est déterminé que la deuxième porteuse assure une meilleure couverture que la première porteuse, et
dans lequel la deuxième porteuse comprend un bloc de ressources unique de l'Internet des objets, NB-IoT, à bande étroite colocalisé dans la première largeur de bande (S2) ; et
recevoir un canal de contrôle en utilisant la deuxième porteuse (S3).

2. Procédé selon la revendication 1, dans lequel la première porteuse est associée à la technologie radio LTE ou 5G.

3. Procédé selon la revendication 1 ou la revendication 2, comprenant, en réponse à la détermination, la provocation d'un transfert intercellulaire de supports autres que des supports du canal de contrôle vers une porteuse secondaire, dans lequel la porteuse secondaire est destinée à une station de base secondaire.

4. Appareil pour un équipement utilisateur dans un état de double connectivité comprenant :
au moins un processeur et au moins une mémoire comportant un code de programme informatique, l'au moins une mémoire et le code de programme informatique étant configurés pour, avec l'au moins un processeur, amener l'appareil au moins à :
déterminer qu'au moins une condition de canal d'une première porteuse est en dessous d'un seuil, la première porteuse fonctionnant comme une porteuse primaire et ayant une première largeur de bande (S1), dans lequel une porteuse primaire est destinée à une station de base principale ;
en réponse à la détermination, passer de la première porteuse primaire à une deuxième porteuse fonctionnant comme une porteuse primaire, dans lequel il est déterminé que la deuxième porteuse assure une meilleure couverture que la première porteuse, et
dans lequel la deuxième porteuse comprend un bloc de ressources unique de l'Internet des objets, NB-IoT, à bande étroite colocalisé dans la première largeur de bande (S2) ; et recevoir un canal de contrôle en utilisant la deuxième porteuse (S3).

5. Appareil selon la revendication 4, dans lequel la première porteuse est associée à une technologie radio LTE ou 5G, et la deuxième technologie d'accès radio est une technologie de l'Internet des objets à bande étroite.

6. Appareil selon la revendication 4 ou la revendication 5, dans lequel, en réponse à la détermination, l'appareil est configuré pour provoquer un transfert intercellulaire de supports autres que des supports du canal de contrôle vers une porteuse secondaire, dans lequel une porteuse secondaire est destinée à une station de base secondaire.

7. Produit de programme informatique pour un ordinateur, comprenant des portions de code logiciel pour réaliser les étapes de l'une des revendications 1 à 3 lorsque le produit est exécuté sur l'ordinateur.
